# EUROPÄISCHE PATENTANMELDUNG

(11) **EP 1 418 598 A1**
(43) Veröffentlichungstag der Anmeldung: **12.05.2004**
(21) Anmeldenummer: 03024961.9
(22) Anmeldetag: 29.10.2003
(51) Int. Cl.: H01G 9/035

(54) **Elektrolyt für hohe Betriebstemperaturen und Aluminiumelektrolytkondensator**

(30) Priorität: 06.11.2002 DE 10251640
(71) Anmelder: EPCOS AG, 81669 München (DE)
(72) Erfinder: Kirschbaum, Thomas, 73098 Rechberghausen (DE)
(74) Vertreter: Epping, Hermann, Fischer

(57) **Zusammenfassung**

Es wird ein erfindungsgemäßer Elektrolyt beschrieben, der als Lösungsmittel Glykol, γ-Butyrolacton und N-Methylpyrrolidon, ein Leitsalz sowie C4 bis C6-Alkylphosphorsäureester umfaßt. Ein derartiger Elektrolyt weist eine besonders hohe Betriebstemperatur von bis zu 150° Celsius auf. Gegenstand der Erfindung ist weiterhin ein Elektrolytkondensator mit dem erfindungsgemäßen Elektrolyten.

## Beschreibung

Elektrolytkondensatoren bestehen aus wenigstens zwei Lagen von Elektrodenfolien, der Anode und der Kathode. Zwischen diesen Elektrodenfolien ist ein mit einem Betriebselektrolyten getränkter Abstandshalter, beispielsweise Papier, angeordnet. Bei Aluminiumelektrolytkondensatoren werden Aluminiumfolien als Elektroden verwendet. Die Anodenfolie ist mit einer dielektrischen Oxidschicht (Formierschicht), beispielsweise aus Aluminiumoxid versehen. Häufig werden die Elektrodenfolien mit dem dazwischen befindlichen Abstandshalter zu einem Kondensatorwickel aufgewickelt.

Die maximale Betriebstemperatur von Aluminiumelektrolytkondensatoren wird wesentlich durch den Elektrolyten bestimmt. Vor allem wasserhaltige Elektrolyte können sich bei hohen Temperaturen verflüchtigen, wobei die Bestandteile des Elektrolyten, z.B. die eingesetzten Leitsalze mit sich selber oder mit den Lösungsmitteln reagieren oder thermisch zersetzt werden können. Für Anwendungen im Automotive-Bereich, z. B. im Motorraum von Kraftfahrzeugen, werden Elektrolyte gesucht, die eine maximale Betriebstemperatur von bis zu 150° Celsius aufweisen. Bislang sind nur Elektrolyte mit einer maximalen Betriebstemperatur bis 125° Celsius bekannt.

Ziel der vorliegenden Erfindung ist es daher, einen Elektrolyten anzugeben, der eine maximale Betriebstemperatur von bis zu 150° Celsius aufweist.

Diese Aufgabe wird mit einem Elektrolyten nach Anspruch 1 gelöst. Vorteilhafte Ausgestaltungen des Elektrolyten sowie Elektrolytkondensatoren mit dem Elektrolyten sind Gegenstand der Unteransprüche.

Ein erfindungsgemäßer Elektrolyt für hohe Betriebstemperaturen umfaßt als Komponente A) zumindest ein hochsiedendes Lösungsmittel mit einem Siedepunkt von 197° Celsius bis 205° Celsius bei 1 bar Druck, das ausgewählt ist aus Glykol, γ-Butyrolacton und N-Methylpyrrolidon. Als Komponente B) ist zumindest ein Leitsalz vorhanden und als Komponente C) zumindest ein C4 bis C6-Alkylphosphorsäureester.

Überraschenderweise hat der Erfinder gefunden, daß eine Mischung aus den oben genannten Lösungsmitteln und zumindest einem Monobutyl- bis Monohexyl-Phosphorsäureester und/oder einem Dibutyl- bis Dihexyl-Phosphorsäureester einen Elektrolyten mit einer besonders hohen Betriebstemperatur ergibt. Die erfindungsgemäßen Elektrolyte weisen nur die oben genannten hochsiedenen Lösungsmittelkomponenten auf und enthalten kein Wasser.

Vorteilhafterweise ist Komponente C) ausgewählt aus Dibutylphosphat und Monobutylphosphat. Diese beiden Alkylphosphorsäureester sind besonders vorteilhafte Komponenten von erfindungsgemäßen Elektrolyten für hohe Betriebstemperaturen.

Komponente B) kann ausgewählt sein aus quarternären Alkylammoniumsalzen der Phthalsäure und quarternären Ammoniumsalzen der Benzoesäure. Gut geeignet sind besonders thermostabile, sterisch gehinderte Ammoniumsalze, bei denen das Ammoniumkation große C1 bis C6 Alkyl oder Phenyl-Liganden aufweist. Bevorzugt ist Komponente B) ein cyclisches Amidiniumphthalat. Erfindungsgemäße Elektrolyte mit einem derartigen Leitsalz weisen besonders hohe Leitfähigkeiten von ca. 7 bis 13 mS/cm auf. Ein besonders gut geeignetes cyclisches Amidiniumphtalat ist 1,2,3,4-Tetramethyl-1H-imidazolium-1,2-benzoldicarboxylat.

Besonders vorteilhaft ist es, wenn Komponente A), die Lösungsmittel, mit einem Anteil von 30 Gewichtsprozent bis 60 Gewichtsprozent und Komponente C), die C4 bis C6 Alkylphosphorsäureester mit einem Anteil von 0,5 Gewichtsprozent bis 1 Gewichtsprozent in dem erfindungsgemäßen Elektrolyten enthalten sind. Komponente B), das Leitsalz ist vorteilhafterweise mit einem Anteil von 50 Gewichtsprozent bis 60 Gewichtsprozent enthalten.

Besonders vorteilhaft ist ein Elektrolyt, der als Komponente A) Glykol, γ-Butyrolacton und N-Methylpyrrolidon, als Komponente B 1,2,3,4-Tetramethyl-1H-imidazolium-1,2-benzoldicarboxylat, als Komponente C) Dibutylphosphat und Monobotylphosphat und als zusätzliche Komponente D) Borsäure enthält. Ein derartiger, erfindungsgemäßer Elektrolyt weist nicht nur die hohe Betriebstemperatur von bis zu 150° Celsius auf, sondern darüber hinaus eine besonders gute Formierwirkung, die durch Dibutylphosphat, Monobutylphosphat und die Borsäure unterstützt wird.

Gegenstand der Erfindung ist weiterhin ein Aluminium-Elektrolytkondensator für hohe Betriebstemperaturen bis 150° Celsius, der einen Kondensatorwickel umfaßt, der aus wenigstens zwei Lagen von Elektroden besteht. Elektroden unterschiedlicher Polarität sind dabei durch einen Abstandshalter, zum Beispiel Papier oder eine Kunststoff-Folie elektrisch isolierend voneinander getrennt. Die Elektroden, die beispielsweise dünne Aluminiumfolien umfassen und der Abstandshalter stehen im Kontakt mit dem erfindungsgemäßen Elektrolyten. Ein derartiger erfindungsgemäßer Elektrolytkondensator weist besonders hohe Betriebstemperaturen bis 150° Celsius auf.

Im folgenden soll der erfindungsgemäße Elektrolyt anhand eines Ausführungsbeispiels näher erläutert werden.

Eine besonders vorteilhafte Variante eines erfindungsgemäßen Elektrolyten weist als Komponente A) ein bis fünf Gewichtsprozent Glykol, 16 Gewichtsprozent γ-Butyrolacton und 23 bis 25 Gewichtsprozent N-Metylpyrrolidon auf (jeweils bezogen auf das Gesamtgewicht des Elektrolyten). Als Komponente B) werden 20 Gewichtsprozent bis 40 Gewichtsprozent 1,2,3,4-Tetramethyl-1H-imidazolium-1,2-benzoldicarboxylat verwendet. Komponente C) ist 0,5 Gewichtsprozent bis 2 Gewichtsprozent Dibutylphosphat und Monobutylphosphat. Als Komponente D) wird 0,5 Gewichtsprozent bis 3 Gewichtsprozent Borsäure verwendet. Ein solcher Elektrolyt kann viertausend Stunden bis 150° Celsius ohne Zersetzung und damit ohne Änderung seiner elektrischen Eigenschaften verwendet werden. Dieser Elektrolyt weist eine Leitfähigkeit von 7,8 mS/cm bei 30° Celsius, eine Spannungsfestigkeit von 83 Volt bei 30° Celsius und eine Spannungsfestigkeit von 76 Volt bei 105° Celsius sowie einen pH-Wert von 7,0 auf.

Die Erfindung beschränkt sich nicht auf das hier dargestellte Ausführungsbeispiel. Weitere Variationen sind vor allem hinsichtlich der Leitsalze möglich.

## Patentansprüche

1. Elektrolyt für hohe Betriebstemperaturen bis 150°C, der folgende Komponenten umfaßt:
A) zumindest ein hochsiedendes Lösungsmittel, das ausgewählt ist aus:
- Glykol, γ-Butyrolacton und N-Methylpyrrolidon,
B) zumindest ein Leitsalz,
C) zumindest einem C4-C6 Alkylphosphorsäureester.

2. Elektrolyt nach dem vorhergehenden Anspruch,
- bei dem Komponente C) ausgewählt ist aus:
- Dibutylphosphat und Monobutylphosphat.

3. Elektrolyt nach einem der vorhergehenden Ansprüche,
- bei dem Komponente B) ausgewählt ist aus:
- quarternären Alkylammonium-Salzen der Phthalsäure und quarternären Alkylammonium-Salzen der Benzoesäure.

4. Elektrolyt nach einem der vorhergehenden Ansprüche,
- bei dem Komponente B) ein cyclisches Amidiniumphthalat ist.

5. Elektrolyt nach dem vorhergehenden Anspruch,
- bei der Komponente B) 1,2,3,4-Tetramethyl-1H-imidazolium-1,2-benzoldicarboxylat ist.

6. Elektrolyt nach einem der vorhergehenden Ansprüche,
- bei dem Komponente A) mit einem Anteil von 30 Gew% bis 60 Gew% und
- Komponente C) mit einem Anteil von 0,5 Gew% bis 1 Gew% enthalten ist.

7. Elektrolyt nach einem der vorhergehenden Ansprüche,
- bei dem Komponente B) mit einem Anteil von 50 Gew% bis 60 Gew% enthalten ist.

8. Elektrolytlösung nach einem der vorhergehenden Ansprüche mit folgenden Komponenten:
A) Glykol, γ-Butyrolacton und N-Methylpyrrolidon,
B) 1,2,3,4-Tetramethyl-1H-imidazolium-1,2-benzoldicarboxylat,
C) Dibutylphosphat und Monobutylphosphat und
D) als zusätzliche Komponente Borsäure.

9. Aluminium-Elektrolytkondensator für hohe Betriebstemperaturen bis 150°C,
- mit einem Kondensatorwickel, der aus wenigstens zwei Lagen von Elektroden besteht,
- bei dem Elektroden unterschiedlicher Polarität durch einen Abstandshalter elektrisch isolierend voneinander abgetrennt werden,
- der einen Elektrolyten nach einem der vorherigen Ansprüche umfaßt.

10. Verwendung eines Elektrolyten nach einem der Ansprüche 1 bis 8 in Aluminium-Elektrolytkondensatoren für hohe Temperaturen bis 150°C.
